# EUROPÄISCHE PATENTANMELDUNG

(11) **EP 1 028 024 A2**
(43) Veröffentlichungstag der Anmeldung: **16.08.2000**
(21) Anmeldenummer: 00101662.5
(22) Anmeldetag: 01.02.2000
(51) Int. Cl.: B60P 7/08, B60P 7/15

(54) **Vorrichtung zum Festlegen wenigstens eines an einem Profil vorgesehenen Haltepunktes für ein Zurrsystem sowie Fahrzeug mit Profil**

(30) Priorität: 11.02.1999 DE 29902381 U; 15.07.1999 DE 29912413 U
(71) Anmelder: ANCRA Jungfalk GmbH, D-78234 Engen (DE)
(72) Erfinder: Schickerling, Tom-Dennis, 21337 Lüneburg (DE); Lohmann, Detlef, 78234 Engen (DE)
(74) Vertreter: Hiebsch, Gerhard F., Dipl.-Ing.

(57) **Zusammenfassung**

Die Erfindung betrifft eine Vorrichtung zum Festlegen wenigstens eines an einem Profil vorgesehenen Haltepunktes für ein Zurrsystem im Laderaum eines Fahrzeugs, insbesondere unter Verwendung einer Zurr- oder Halteschiene (20) als Profil mit hinterschnittener Längsnut (25) und an dieser in Abstand zueinander angeordneten Durchbrüchen (30) als Haltepunkten, wobei das den/die Haltepunkte aufweisende Profil mit einem am Fahrzeug festlegbaren Tragelement verbindbar oder mit wenigstens einem Paar von zu seiner Längsachse einstellbaren Befestigungseinrichtungen (36) versehen ist, die mittels Schrauben od.dgl. Kupplungselemente fahrzeugseitig festlegbar sind.

## Beschreibung

Die Erfindung betrifft Vorrichtung zum Festlegen wenigstens eines an einem Profil vorgesehenen Haltepunktes für ein Zurrsystem im Laderaum eines Fahrzeugs, insbesondere unter Verwendung einer Zurr- oder Halteschiene mit hinterschnittener Längsnut und an dieser in Abstand zueinander angeordneten Druchbrüchen als Haltepunkten. Zudem erfaßt die Erfindung ein Fahrzeug mit dem Profil.

In der Schrift zu DE 91 05 425 U1 erörtert die Anmelderin einen Behängungsausbau für Frachtbehälter, insbesondere für Aufbauten von Lastkraftwagen, mit endwärts in Ausnehmungen eines Paares schienenartiger Tragprofile lösbar eingesetzten Kleiderstangen od.dgl. Stäbe, welche den Behälterraum durchgreifen. Dazu werden stranggepresste Profile kastenartigen Querschnitts eingesetzt, die an ihrer Sichtoberfläche mit einer in der Profillängsachse verlaufenden hinterschnittenen Längsnut versehen sind. Deren die Hinterschneidungen übergreifende Nutränder sind mit Ausbuchtungen versehen, von denen jeweils ein Paar auf einer Kreiskontur liegt. Der Kreuzungspunkt dieser mit der jeweiligen Längskante definiert einen Vorsprung bzw. eine Auflage. Diese schienenartigen Profile bieten Haltepunkte zum stufenweisen Festlegen von Klemmschuhen jener oben erwähnten Kleiderstangen oder Stäbe an. Zudem werden solche Halteschienen beispielsweise bei Zurranlagen für Luftfracht in Flugzeugen als sog. Airline-Systeme eingesetzt.

Das Fehlen solcher Haltepunktsysteme in Fahrzeugen, die nicht -- wie bei dem Kleidertransport dienenden Lastkraftwagen oder bei Flugzeugen -- serienmäßig mit Zurrschienen ausgerüstet sind, hat sich vor allem bei Kleintransportern als Nachteil erwiesen. Bei solchen Fahrzeugen werden derzeit in Einzelfertigung Verzurrpunkte zur Ladungssicherung unmittelbar an tragende Teile der Fahrzeugstruktur angeschlossen; sind die tragenden Teile des Fahrzeugaufbaus nicht an der Stelle, an welcher sie zur Ladungssicherung bzw. zum Anbringen der bekannten Zurrschienen benötigt werden, entstehen Probleme - dies vor allem bei Transportfahrzeugen, deren Karosserie in leicht modifizierter Version auch als Kombifahrzeug mit Fensterausschnitten hergestellt und bei denen statt der Fenster Blechteile eingesetzt werden. Bei als Kombi- und Transporter gebauten Fahrzeugen bleibt zumeist nur die Möglichkeit, Gurtbefestigungspunkte in die Sitze zu integrieren, wodurch die bei Kurvenfahrten und im Falle eines Unfalls entstehenden Massenkräfte in die stabile Bodenstruktur eingeleitet werden. Werden Zurrschienen direkt auf dem Fahrzeugboden befestigt, vermindert sich die Stellfläche für die Ladung. Zudem ist der Einbau von Zurrschienen an der stabilen Bodenstruktur nachteilig, da die Zurrschiene schwer zugänglich bleibt. Das Anbringen an den Seitenwandstrukturen ist nicht ratsam, da die Seitenwände solcher Fahrzeugkarosserien relativ schwach ausgelegt sind und die an den Verzurrpunkten angreifenden Massenkräfte -- oder die eingeleiteten Spannkräfte -- Verformungen der Seitenwandstruktur mit sich bringen können.

In Kenntnis dieses Standes der Technik hat sich der Erfinder das Ziel gesetzt, auch einfache Serientransportfahrzeuge ohne in deren Karosseriestruktur eingreifende bauliche Änderungen mit einem sicheren Zurrsystem zu versehen, welches in einfacher Weise herzustellen sowie anzubringen ist.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß ist das den/die Haltepunkt/e aufweisende Profil mit einem am Fahrzeug festlegbaren Tragelement verbindbar oder aber mit wenigstens einem Paar von zu seiner Längsachse einstellbaren Befestigungseinrichtungen versehen, die mittels Schrauben od.dgl. Kupplungselementen fahrzeugseitig festgelegt zu werden vermögen. Die erwähnten Befestigungseinrichtungen für das Profil sind bevorzugt winkelartige Laschenschuhe sowie an ihm bzw. an der Zurr- oder Halteschiene angelenkt.

In einer Ausführung besteht das Tragelement aus miteinander verbundenen Holmen od.dgl. Stäben als Aufnahmeorganen für die Profile bzw. Halteschienen; die Holme sind endwärts mit Platten als Befestigungseinrichtungen versehen, die ihrerseits in einer anderen Ausgestaltung am Holm angelenkt und zu ihm geneigt einstellbar sein können.

Nach einem weiteren Merkmal der Erfindung soll die Gelenkachse im Profil -- oder im Holm -- quer zu dessen Längsachse lagern sowie einen Schenkel des winkelartigen Laschenschuhs durchsetzen; der andere Schenkel des Laschenschuhs weist Durchbrüche für die Kupplungselemente auf. Als günstig haben sich zwei solche Laschenschuhe an jedem Stirnende des Profils mit gemeinsamer Gelenkachse erwiesen; jeder Profilseitenwand ist dann ein Laschenschuh zugeordnet.

Dank dieser Maßgabe kann die Zurrschiene -- mit den von ihr angebotenen Halte- oder Rastpunkten -- während des Einbauvorgangs durch Verschwenken jener Befestigungseinrichtung an die Geometrie der jeweiligen Fahrzeugwandung angepasst werden. Diesem Zwecke dient auch ein weiteres Merkmal, wonach das Profil bzw. die Zurrschiene längenveränderbar ausgebildet ist, beispielsweise axial ineinandersteckbare Abschnitte aufweist.

Um eine ausreichende Festigkeit zu erzielen, soll das Profil ein Hohlprofil als Sockel aufweisen, an das ein Firstteil mit der hinterschnittenen Längsnut und an dieser in Abstand zueinander angeordneten Durchbrüchen als Haltepunkte angeformt ist.

Zur Befestigung des Profils ist es vorteilhaft, wenn das Tragelement mindestens einen -- vorzugsweise zwei -- im wesentlichen horizontal angeordneten Querholm aufweist; das Profil läßt sich so auf seiner gesamten Länge direkt am Querholm befestigen, wodurch der Querholm zusätzlich vorteilhaft verstärkt wird.

Alternativ oder in Kombination mit horizontalen Querholmen ist vorgesehen, in das Tragelement mindestens einen -- vorteilhafterweise paarweise -- im wesentlichen vertikalen Holm einzubauen. Dadurch wird die Belastungsgrenze für die Zurrpunkte weiter erhöht, was auch insgesamt zu einer Stärkung der Fahrzeugstruktur beiträgt.

Das erfindungsgemäße Tragelement läßt sich dank der Platten an den Enden der Holme besonders einfach befestigen; außerdem werden über die Platten die auftretenden Kräfte unter Vermeidung übermäßiger Flächenpressung in die Tragkonstruktion des Fahrzeugs eingeleitet.

Da das Profil bzw. die Zurrschiene auf mindestens einem horizontalen Querholm befestigt ist und beidseitig seitliche Flanschleisten aufweist, bieten sich zusätzliche Befestigungsmöglichkeit im Bereich der Flanschleiste.

Eine besonders optisch ansprechende Lösung ergibt sich, wenn auf den Flanschleisten eine Wandverkleidung befestigt wird, dies bevorzugt durch selbstschneidende Schrauben.

Im Rahmen der Erfindung liegt auch ein Fahrzeug mit einer Zurrschiene, das hinter einer horizontalen Fahrzeugseitenwandstruktur einen -- vorzugsweise als rechteckiges Hohlprofil ausgebildeten -- Profilverstärkungsträger aufweist, wobei die Zurrschiene mit der Fahrzeugseitenwandstruktur und dem Verstärkungsträger mittels Blindnietmuttern im Verstärkungsträger verschraubt ist. Die an sich labile -- weil dünne -- Blechkonstruktion der profilierten Seitenwandstruktur wird durch den Profilverstärkungsträger in ihrer Belastbarkeit so erhöht, dass in die Blindnietmuttern Befestigungspunkte einschraubbar sind. Die Befestigung des Tragelements gestaltet sich besonders einfach; dieses wird zunächst in der Endposition fixiert. Anschließend werden vor Ort Bohrungen in die Seitenwandstruktur eingebracht, und letztere wird mit dem Tragelement verbunden, indem die Zurrschiene durch Schrauben -- die durch die Seitenwandstruktur hindurch in das Gewinde der im Verstärkungsträger eingebrachten Blindnietmuttern eingreifen -- befestigt wird.

In weiterer Ausgestaltung weist das Fahrzeug auch zusätzlich jenes oben beschriebene Tragelement aus Quer- und/oder Längsholmen auf, die in eine vorgesehene Fensteröffnung eingesetzt sind. Auf diese Weise kann die Ladung in unterschiedlichen Höhen gesichert werden.

Es können auch unterschiedlich lange Fahrzeuge in der Seitenwandstruktur in günstiger Weise verstärkt werden, wenn der Profilverstärkungsträger steckbar ausgebildet ist.

Dank der Erfindung können jetzt Transporter mit einem professionellen Verzurrschienensystem zur Ladungssicherung problemlos nachgerüstet werden. Dieses Verzurrschienensystem basiert auf einer Aluminium-Konstruktion mit integrierter Airline-Zurrschiene, die in die Fensterausschnitte des Laderaums eingebaut und sicher verankert wird.

Dieses Zurrschienen-System hat sich beim Sichern von Ladegut bestens bewährt und ist jeder konventionellen Ankerschiene hinsichtlich Festigkeit, Gewicht und Abmessung weitaus überlegen.

Die Zurrschienen werden horizontal oder vertikal in die Laderaumwände eingebaut. Es können über die gesamte Länge Sperrstangen, Zurrgurte oder Netze zur Ladungssicherung schnell und sicher befestigt werden. Bei vertikaler Anordnung der Schienen besteht auch die Möglichkeit, klappbare Regalböden einzuhängen.

Der erfindungsgemäß gestaltete Bausatz kann in kürzester Zeit von jeder Autowerkstatt problemlos eingebaut und auf Wunsch mit vorgefertigten, hochstrapazierbaren Wandverkleidungsplatten ausgerüstet werden. Durch den modularen Aufbau des Systems entscheidet der Kunde, wieviele Zurrschienen er für sein Fahrzeug benötigt.

Die zusammengefassten Vorzüge der Erfindung sind u.a.:
- modernste Zurrschienentechnik aus dem Flugzeugbau;
- die Möglichkeit, Sperrstangen, Zurrgurte und Netze zur Ladungssicherung schnell und sicher zu befestigen;
- hoch belastbar durch Integration in die Fahrzeugstruktur;
- Schutz der Seitenwände durch strapazierfähige Verkleidungen;
- kein Laderaumverlust bei geringem Mehrgewicht;
- getestet im Zugversuch nach DIN 754 10 T1 bis max. 1,5 t;
- schneller Einbau auch in der Nachrüstung.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Seitenansicht eines Transportes oder Kombifahrzeugs mit an den Innenseiten seiner Seitenwände vertikal verlaufenden Zurr- oder Halteschienen;
- Fig. 2:: eine teilweise transparente Seitenansicht eines Kombifahrzeugs mit horizontalen Zurrschienen an den Innenseiten seiner Seitenwände;
- Fig. 3:: die teilweise geschnittene Draufsicht auf das Fahrzeug der Fig. 2;
- Fig. 4:: eine Seitenansicht einer Zurrschiene;
- Fig. 5:: die Draufsicht zu Fig. 4;
- Fig. 6, 8:: vergrößerte Ausschnitte aus den Fig. 4, 5;
- Fig. 7:: eine vergrößerte Stirnansicht zu Fig. 4;
- Fig. 9:: eine Schrägsicht auf die Zurrschiene der Fig. 4, 5;
- Fig. 10:: eine vergrößerte Sicht auf die Innenseite eines Fensters des Fahrzeugs zu einer weiteren Ausführungsform;
- Fig. 11:: den vergrößerten Schnitt durch eine Seitenwand eines Kombifahrzeuges nach Linie XI-XI in Fig. 2;
- Fig. 12:: einen vergrößerten Ausschnitt aus Fig. 11.

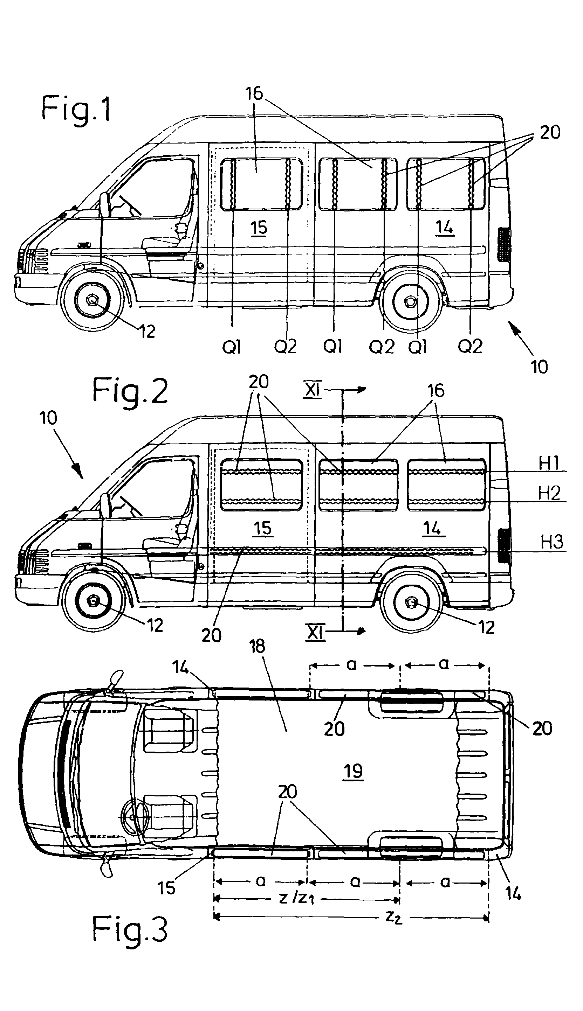

Ein Transporter oder Kombifahrzeug 10 mit zwei Radachsen 12 weist in jeder Seitenwand 14 seines Kastenaufbaus drei Fenster 16 auf, denen im Laderaum 18 jeweils zwei Zurr- oder Halteschienen 20 zugeordnet sind - und zwar gemäß Fig. 1 in vertikalen Ebenen Q₁, Q₂ sowie nach Fig. 2 in zwei horizontalen Ebenen H₁, H₂. Zudem ist bei dem letztgenannten Ausführungsbeispiel in einer dritten Ebene H₃ eine der Ladefläche 19 benachbarte lange Zurr- oder Halteschiene 20 an der Seitenwand 14 zu erkennen, die im Bereich einer in der Seitenwand 14 angebrachten Seitentüre 15 geteilt ist. Die Länge der Befestigungsbereiche der oberen Zurrschienen 20 ist in Fig. 3 mit a bezeichnet. Im Falle modularer Bausätze können diese auf die Radstände abgestimmt werden, beispielsweise auf die drei Radstände z (3.000 mm), z₁ (3.550 mm) und z₂ (4.025 mm) des Transporters 10.

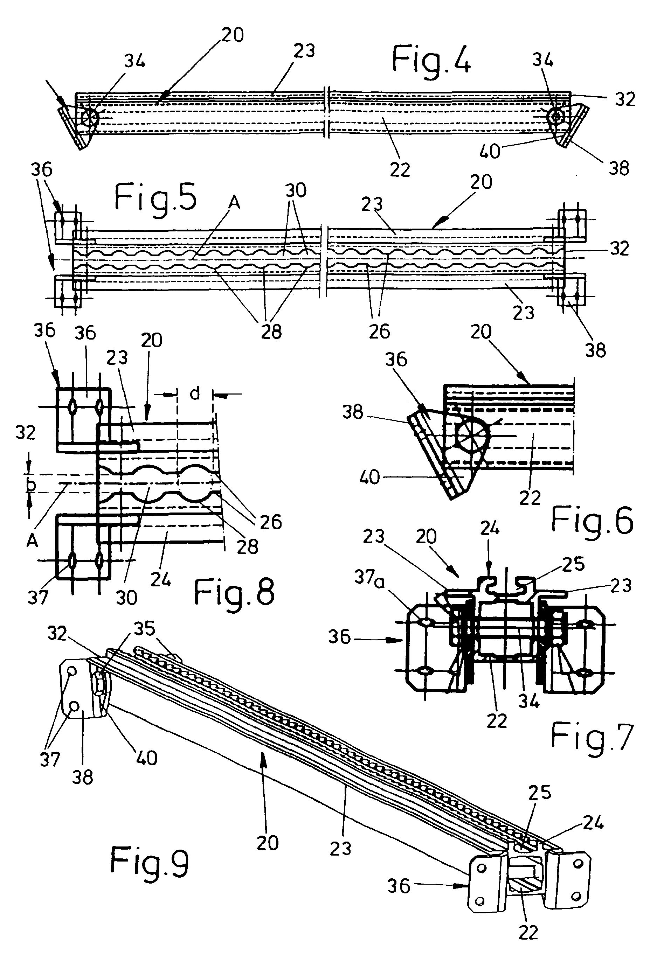

Die Zurr- oder Halteschiene 20 weist ein Sockelprofil 22 mit hohlem Rechteckguerschnitt auf, dem ein Firstteil 24 mit beidseitig abstehenden Laschenflügeln 23 und einer hinterschnittenen Längsnut 25 angeformt ist. Deren in einem Abstand b von etwa 12 mm parallel zur Längsachse A verlaufende Nutenränder 26 sind in Fig. 5, 8 durch in Draufsicht teilkreisförmige Konturen 28 wellenartig gestaltet, welche i.w. kreisartige Durchbrüche 30 des Durchmessers d von hier 20 mm bestimmen. Derartige Halteschienen 20 für in die Durchbrüche 30 einzusetzende Spanneinrichtungen werden vor allem in Form von Zurrschienen auch in Flugzeuge eingebaut, wobei allerdings in diese Zurrschienen kein Sockelprofil integriert ist.

Nahe den Stirnkanten 32 der Zurrschiene 20 durchsetzt deren Sockelprofil 22 jeweils ein Achsstift 34 als Gelenkachse für ein Paar von Laschenschuhen 36. Jeder in der Art eines Winkelstücks geformte Laschenschuh 36 besteht aus einer --Rundlöcher 37 oder Langlöcher 37ₐ aufweisenden -- Fußplatte 38 und einer von dieser rechtwinkelig aufgebogenen Lagerwand 40 bevorzugt dreiecksähnlicher Form mit gerundeter Kontur. Diese einen Schenkel des Winkelstücks bildende Lagerwand 40 hängt an jenem sie durchsetzenden Achsstift 34, dessen Muttern in Fig. 9 mit 35 bezeichnet sind.

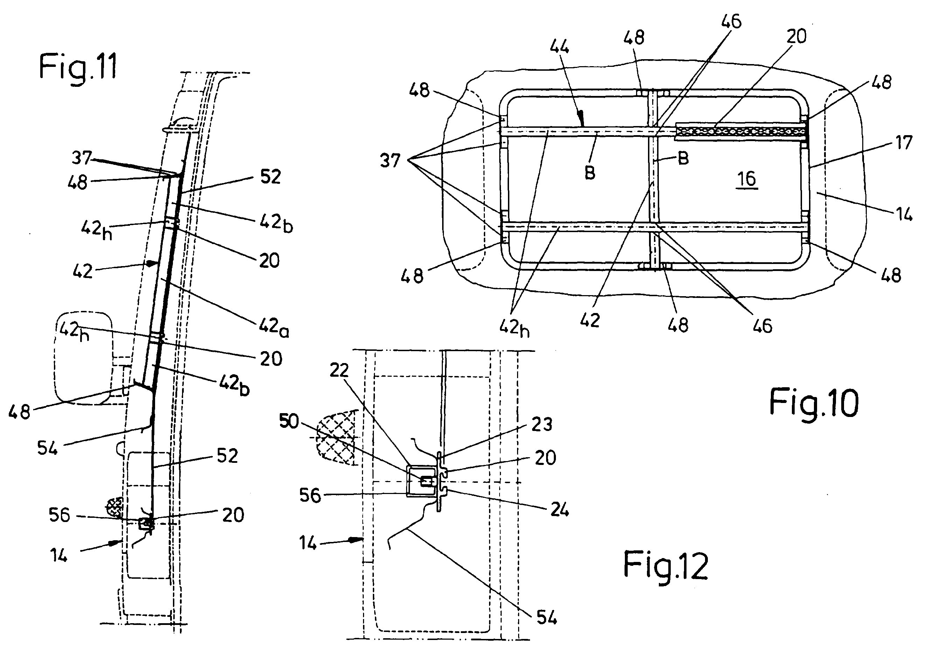

Das Fenster 16 der Fig. 10 wird innenseitig von einem vertikalen mittigen Holm 42 und einem Paar diesen kreuzender horizontaler Querholme 42_{b} überspannt, die einen Träger 44 für Zurrschienen 20 bilden. Die Holme 42, 42ₕ verlaufen dadurch i.w. in einer Ebene, dass der vertikale Holm 42 entweder Einschnitte zur Aufnahme der Querholme 42ₕ aufweist oder gemäß Fig. 11 aus drei Teilen 42ₐ, 42_{b} zusammengesetzt ist, die beidseits der Querholme 42ₕ sitzen. Die Holme 42, 42ₕ, deren Längsachsen mit B bezeichnet sind, werden an ihren Kreuzungsbereichen durch Schweißnähte verbunden sowie an ihren freien Enden mit -- Befestigungslöcher 37 anbietenden -- Platten 48 versehen. Diese übertragen auftretende Zurrkräfte ohne übermäßige Flächenpressung in das dünne Blech der Seitenwand 14. Die Platten 48 liegen an ihrem Holm 42, 42ₕ fest, und ihre vorbestimmte Winkelstellung zu diesem ist der Fahrzeugstruktur 14 angepasst. Nicht gezeigt ist, dass auch diese Platten 48 an ihre Holme 42, 42ₕ angelenkt und damit verstellbar sein können.

Der Träger 44 wird mittels nicht dargestellter Blechschrauben im Fensterausschnitt 17 befestigt. Zur Montage der --hier nur angedeuteten -- Zurrschiene 20 sind in die horizontalen Querholme 42ₕ Bohrungen für Blindnietmuttern 50 (Fig. 12) eingebracht. Die Zurrschienen 20 werden mittels in die Blindnietmuttern 50 eingreifender Schrauben an den jeweiligen Querholm 42ₕ angeschlossen.

Gemäß Fig. 11 tragen die Zurrschienen 20 an der Seite Flansche, auf denen eine Wandverkleidung 52 mit nicht dargestellten Schrauben oder Nieten befestigt wird. Diese Wandverkleidung 52 steht über die bei 54 angedeutete seitliche Fahrzeugstruktur hinaus, so dass sie sich dort optisch ansprechend anschmiegt. Im unteren Bereich ist die seitliche Fahrzeugstruktur 54 durch einen Profilträger 56 verstärkt. Dessen Aufbau mit der unteren Zurrschiene 20 ergibt sich aus Fig. 12.

Die Befestigungslöcher 37 werden mit Hilfe einer Bohrschablone in die Fahrzeugstruktur 54 eingebracht. Anschließend wird der Profil- oder Verstärkungsträger 56 im unteren Bereich des Transporters 10 hinter dessen Seitenwandstruktur gelegt. Unterschiedlichen Fahrzeuglängen kann der Verstärkungsträger 56 in seiner Länge durch abschnittsweises Zusammenstecken angepasst werden. Zu diesem Zweck sind in ihm bzw. seinem Sockelprofil 22 -- aus Gründen der Übersichtlichkeit nicht wiedergegebene -- geeignete Steckhülsen vorgesehen, die das Zusammenstecken ohne nach außen ragende Überstände erlauben.

Die Blindnietmuttern 50 dienen zudem zur Aufnahme von in der Zeichnung vernachlässigten Befestigungsschrauben, welche die Zurrschiene 20 halten.

Auf die geschilderte Weise können auch herkömmliche geschlossene Transportkraftwagen schnell, einfach und kostengünstig mit ausreichend belastbaren Zurrpunkten im Karosseriewandbereich nachgerüstet werden.

## Patentansprüche

1. Vorrichtung zum Festlegen wenigstens eines an einem Profil vorgesehenen Haltepunktes für ein Zurrsystem im Laderaum eines Fahrzeugs, insbesondere unter Verwendung einer Zurr- oder Halteschiene als Profil mit hinterschnittener Längsnut und an dieser in Abstand zueinander angeordneten Durchbrüchen als Haltepunkten,
dadurch gekennzeichnet,
dass das den/die Haltepunkt/e (30) aufweisende Profil (20) mit einem am Fahrzeug (10) festlegbaren Tragelement (44) verbindbar oder mit wenigstens einem Paar von zu seiner Längsachse (A) einstellbaren Befestigungseinrichtungen (36) versehen ist, die mittels Schrauben od.dgl. Kupplungselemente fahrzeugseitig festlegbar sind.

2. Vorrichtung nach Anspruch 1, dadurch gekennzeichnet, dass die Befestigungseinrichtungen winkelartige Laschenschuhe (36) sowie an der Zurr- oder Halteschiene (20) angelenkt sind.

3. Vorrichtung nach Anspruch 1, dadurch gekennzeichnet, dass das Tragelement (44) miteinander verbundene Holme od.dgl. Stäbe (42, 42ₕ) als Aufnahmeorgane für die Profile bzw. Halteschienen (20) aufweist sowie die Holme endwärts mit Platten (48) als Befestigungseinrichtungen versehen sind.

4. Vorrichtung nach Anspruch 3, dadurch gekennzeichnet, dass die Platten (48) an dem Holm (42, 42ₕ) angelenkt und zu ihm geneigt einstellbar sind.

5. Vorrichtung nach einem der Ansprüche 1 bis 4, dadurch gekennzeichnet, dass eine Gelenkachse (34) im Profil (20) oder im Holm (42, 42ₕ) quer zu dessen Längsachse (A, B) lagert sowie einen Schenkel (40) des winkelartigen Längsschuhes (36) durchsetzt, wobei der andere Schenkel (38) des Laschenschuhs Durchbrüche (37, 37ₐ) für die Kupplungselemente aufweist.

6. Vorrichtung nach einem der Ansprüche 1 bis 5, dadurch gekennzeichnet, dass jeder Stirnseite des Profils (20) oder des Holms (42, 42ₕ) zwei Befestigungseinrichtungen (30) zugeordnet sind, die beidseits des Profils oder Holms angebracht und durch eine gemeinsame Gelenkachse (34) verbunden sind.

7. Vorrichtung nach einem der Ansprüche 1 bis 6, dadurch gekennzeichnet, dass das Profil (20) ein Hohlprofil als Sockel aufweist, an das ein Firstteil (24) mit hinterschnittener Längsnut (25) und an dieser in Abstand zueinander angeordneten Durchbrüchen (30) als Haltepunkte angeformt ist.

8. Vorrichtung nach einem der Ansprüche 1 bis 7, gekennzeichnet durch ein längenveränderliches Profil (20) oder einen längenveränderlichen Holm (42, 42ₕ).

9. Vorrichtung nach einem der Ansprüche 1 bis 7, gekennzeichnet durch ein in seiner Längserstreckung aus mehreren gesonderten Abschnitten zusammengesetztes Profil (20).

10. Vorrichtung nach einem der Ansprüche 1 bis 6, gekennzeichnet durch einen aus mehreren Abschnitten zusammengesetzten Holm (42, 42h).

11. Vorrichtung nach Anspruch 9 oder 10, dadurch gekennzeichnet, dass die Abschnitte des zusammengesetzten Profils (20) oder Holmes (42, 42ₕ) mit Steckverbindern versehen sind.

12. Vorrichtung nach einem der Ansprüche 1 bis 11, dadurch gekennzeichnet, dass das Tragelement (44) zumindest einen, vorzugsweise zwei, im wesentlichen horizontal angeordnete/n Querholm/e (42ₕ) aufweist.

13. Vorrichtung nach einem der Ansprüche 1 bis 12, dadurch gekennzeichnet, dass das Tragelement (44) zumindest einen, vorzugsweise zwei, im wesentlichen vertikale/n Holm/e (42) aufweist.

14. Vorrichtung nach einem der Ansprüche 1 bis 13, dadurch gekennzeichnet, dass das Profil (20) auf mindestens einem horizontalen Querholm (42ₕ) befestigt ist und beidseitig seitliche Flanschleisten oder Laschenflügel (23) aufweist.

15. Vorrichtung nach einem der Ansprüche 1 bis 14, dadurch gekennzeichnet, dass auf den Flanschleisten oder Laschenflügeln (23) eine Wandverkleidung (52) befestigt ist, vorzugsweise durch selbstschneidende Schrauben (50).

16. Vorrichtung nach einem der Ansprüche 1 bis 15, dadurch gekennzeichnet, dass das Tragelement (44) zum Einbau in einen Ausschnitt (17) für Fenster eines Fahrzeugs ausgebildet ist.

17. Fahrzeug mit einem Profil als Zurrschiene, dadurch gekennzeichnet, dass es hinter einer horizontalen Fahrzeugseitenwandstruktur (54) einen, vorzugsweise als rechteckiges Hohlprofil ausgebildeten, Profilverstärkungsträger (56) aufweist, wobei das Profil (20) mit der Fahrzeugseitenwandstruktur und dem Verstärkungsträger mittels Blindnietmuttern (50) im Verstärkungsträger verschraubt ist.

18. Fahrzeug nach Anspruch 17, dadurch gekennzeichnet, dass das Profil (20) mittel in die Blindnietmuttern (50) eingreifenden Schrauben befestigt ist.

19. Fahrzeug nach Anspruch 17 oder 18, dadurch gekennzeichnet, dass es in mindestens einem Fensterausschnitt (17) ein Tragelement (44) oder ein Profil (20) nach einem der Ansprüche 1 bis 16 aufweist.
